# DEMANDE DE BREVET EUROPEEN

(11) **EP 1 591 332 A1**
(43) Date de publication de la demande: **02.11.2005**
(21) Numéro de dépôt: 05300286.1
(22) Date de dépôt: 15.04.2005
(51) Int. Cl.: B60T 8/88, G05B 23/02, H02J 7/14, H02J 1/10, H02J 9/06

(54) **Dispositif de surveillance du réseau de distribution d'énergie d'un véhicule**

(30) Priorité: 28.04.2004 FR 0404475
(71) Demandeur: Renault s.a.s., 92100 Boulogne Billancourt (FR)
(72) Inventeur: Bellego, Laurent, F-78860 Saint Nom La Breteche (FR)

(57) **Abrégé**

L'invention concerne un dispositif de surveillance du réseau de distribution d'énergie électrique dans un véhicule comprenant également un réseau de communication. Le réseau de distribution relie au moins un dispositif d'alimentation fournissant une énergie électrique à au moins une charge électrique par l'intermédiaire d'une ligne de puissance. Le dispositif de surveillance comprend des moyens pour déterminer une consommation énergétique de la charge à partir d'une information fournie par la charge sur le réseau de communication.

Le dispositif de surveillance selon l'invention est caractérisé par :
- des moyens pour déterminer une quantité d'énergie fournie à la charge par le dispositif d'alimentation à partir d'une information fournie par le dispositif d'alimentation sur le réseau de communication,
- des moyens pour comparer la dite consommation énergétique avec la quantité d'énergie fournie, et
- des moyens pour produire une alerte si la dite consommation énergétique est différente de la quantité d'énergie fournie.

## Description

L'invention concerne la surveillance du réseau de distribution d'énergie électrique dans un véhicule. Plus précisément, l'invention concerne un dispositif de surveillance du réseau de distribution reliant au moins un dispositif d'alimentation fournissant une énergie électrique à au moins une charge électrique par l'intermédiaire d'une ligne de puissance, le véhicule comprenant également un réseau de communication permettant au dispositif d'alimentation et à la charge d'échanger des informations, le dispositif de surveillance comprenant des moyens pour déterminer une consommation énergétique de la charge à partir d'une information fournie par la charge sur le réseau de communication.

Dans les nouveaux véhicules, les commandes des organes essentiels, comme par exemple la direction ou les freins, sont de plus en plus souvent découplées. On parle en langage anglo-saxon de commande de type X-by-wire. Dans de tels systèmes à commande découplée, le dispositif de commande sur lequel agit le conducteur (le volant, la pédale de frein, etc.) n'est plus relié mécaniquement à l'organe sur lequel le dispositif de commande agit (les roues directrices du véhicule, les freins, etc.), mais est relié de manière électrique ou électronique.

Dans de tels systèmes à commande électrique ou électronique, on comprend que la sécurité du réseau de distribution d'énergie, qui alimente les organes agissant directement sur les freins, la direction, etc., est primordiale pour assurer la sécurité des personnes et faciliter la maintenance du réseau.

Sont déjà prévus dans les véhicules des systèmes de mesure redondants, pour mesurer des paramètres du véhicule (vitesse, position du volant de direction, etc.) indispensables à la commande de certains organes. Ainsi, deux capteurs placés au même endroit et mesurant le même paramètre sont généralement prévus en vue de palier le dysfonctionnement éventuel de l'un des deux capteurs. Néanmoins de tels systèmes de mesure redondants ne permettent pas de détecter des éventuels dysfonctionnements au niveau du réseau de distribution énergétique lui-même.

C'est donc un objectif de l'invention de fournir un dispositif de surveillance du réseau de distribution énergétique qui permette de détecter d'éventuels dysfonctionnements autres que ceux détectés par des capteurs de mesure redondants.

Cet objectif est atteint avec un dispositif de surveillance selon l'invention, caractérisé par :
- des moyens pour déterminer une quantité d'énergie fournie à la charge par le dispositif d'alimentation à partir d'une information fournie par le dispositif d'alimentation sur le réseau de communication,
- des moyens pour comparer la dite consommation énergétique avec la quantité d'énergie fournie, et
- des moyens pour produire une alerte si la consommation énergétique est différente de la quantité d'énergie fournie.

Ainsi, dans un dispositif selon l'invention, on prévoit de corréler des informations déjà disponibles sur le réseau de communication, pour en déduire un éventuel dysfonctionnement au niveau du réseau de distribution. D'une différence entre l'énergie fournie par le dispositif d'alimentation et l'énergie consommée par la charge, on pourra par exemple déduire l'existence d'une fuite d'énergie électrique sur la ligne de puissance reliant le dispositif d'alimentation et la charge. L'invention permet également de détecter la défaillance d'un des capteurs employés pour la mesure de l'information.

En fonction de la gravité du dysfonctionnement constaté et de critères de sécurité retenus, l'alerte produite en cas de dysfonctionnement peut prendre des formes variées allant de l'allumage d'un voyant d'alerte du conducteur sur le tableau de bord du véhicule à l'immobilisation du véhicule. Par exemple, on peut envisager d'allumer simplement un voyant orange si la différence entre l'énergie fournie et l'énergie consommée est inférieure à environ 5%, d'allumer un voyant rouge si cette différence est comprise entre environ 5% et environ 30%, et d'immobiliser le véhicule si cette différence dépasse 30%.

Selon le mode de mise en oeuvre de l'invention et en fonction de critères de sécurité retenus, on prévoit d'effectuer des mesures et une comparaison au démarrage du véhicule et / ou à des intervalles de temps déterminés et / ou en continu pendant toute la durée de roulage du véhicule.

Le réseau de distribution énergétique susceptible d'être surveillé par le dispositif selon l'invention pourra être au choix une partie du réseau électrique du véhicule (par exemple uniquement l'alimentation électrique du système de freinage du véhicule) ou l'ensemble du réseau électrique du véhicule. On pourra envisager également de surveiller plusieurs parties en parallèle, par exemple d'une part le système de freinage et d'autre part le système de direction. Bien sûr, selon l'étendue géographique du réseau électrique surveillé, les moyens de comparaison devront tenir compte des chutes de tension, des fuites énergétiques, etc. inhérentes à tout réseau de distribution d'énergie et due à la longueur des lignes de puissance.

Dans le cadre de l'invention, la notion de charge doit être entendue au sens le plus large.

Dans un mode de réalisation le plus simple, la charge est un unique consommateur d'énergie électrique, tel que par exemple un moteur électrique commandant le positionnement des roues directrices du véhicule ou bien un frein électrique associé à l'une des roues du véhicule. L'information fournie par la charge sur le réseau de communication du véhicule est dans ce cas une indication du courant et / ou de la tension et / ou de la puissance électrique consommé par la charge. L'information peut être plus généralement toute information susceptible de donner une indication de la puissance énergétique consommée par la charge.

Dans un autre mode de réalisation, la charge comprend au moins deux consommateurs d'énergie connectés électriquement en série ou en parallèle au dispositif d'alimentation. La consommation énergétique de la charge est alors déterminée à partir d'une information relative à la consommation énergétique de l'un des consommateur et d'une information relative à la consommation énergétique de l'autre des consommateurs, ces deux informations étant mises à disposition par chaque consommateur sur le réseau de communication du véhicule, comme on le verra mieux par la suite dans des exemples de réalisation.

Dans le cadre de l'invention, la notion de dispositif d'alimentation doit également être interprétée au sens le plus large.

Dans un mode de réalisation simple, le dispositif d'alimentation est une unique source d'énergie électrique, par exemple une batterie d'accumulateurs ou un condensateur. La source d'énergie peut éventuellement être rechargeable lors du roulage du véhicule. L'information fournie par le dispositif d'alimentation et nécessaire à la mise en oeuvre de l'invention est dans ce cas une indication du courant et / ou de la tension et / ou de la puissance électrique fournie par la source d'énergie et / ou un niveau de charge de cette source, ou plus généralement toute information susceptible de donner une indication de la puissance fournie par le dispositif d'alimentation.

Dans un autre mode de réalisation plus complexe, le dispositif d'alimentation comprend au moins deux sources d'énergie, par exemple de type batterie d'accumulateurs, et un boîtier de distribution pour connecter l'une et / ou l'autre des sources d'énergie à la charge. La quantité d'énergie produite est dans ce cas obtenue à partir des informations fournies par chaque source séparément et des connexions électriques de chaque source au boîtier de distribution.

L'invention est mise en oeuvre en utilisant de préférence en priorité les capteurs de mesure (de courant, de tension, de puissance, de vitesse, etc.), déjà présents dans le véhicule et utilisé par ailleurs. On utilise également de préférence le réseau de communication déjà présent dans le véhicule, réseau qui peut être plus ou moins élaboré. Ce réseau peut être limité à un simple fil reliant un dispositif de commande du dispositif d'alimentation à un dispositif de commande de la charge. Ce réseau peut être également beaucoup plus étendu, tel qu'un réseau CAN, ou tout autre réseau « event-triggered » ou un réseau « time triggered » permettant la communication de l'ensemble des organes du véhicule commandés électriquement ou électriquement.

A noter enfin que, selon sa réalisation, le dispositif selon l'invention peut permettre de surveiller soit une petite partie du réseau électrique, par exemple la commande de direction ou la commande de freinage du véhicule, soit l'ensemble du réseau électrique. On peut en effet envisager de corréler en continu dans le temps l'ensemble des informations disponibles dans le véhicule et relatives à la consommation électrique de chaque dispositif du véhicule avec l'ensemble des informations relatives aux sources d'énergie électriques présentes dans le véhicule.

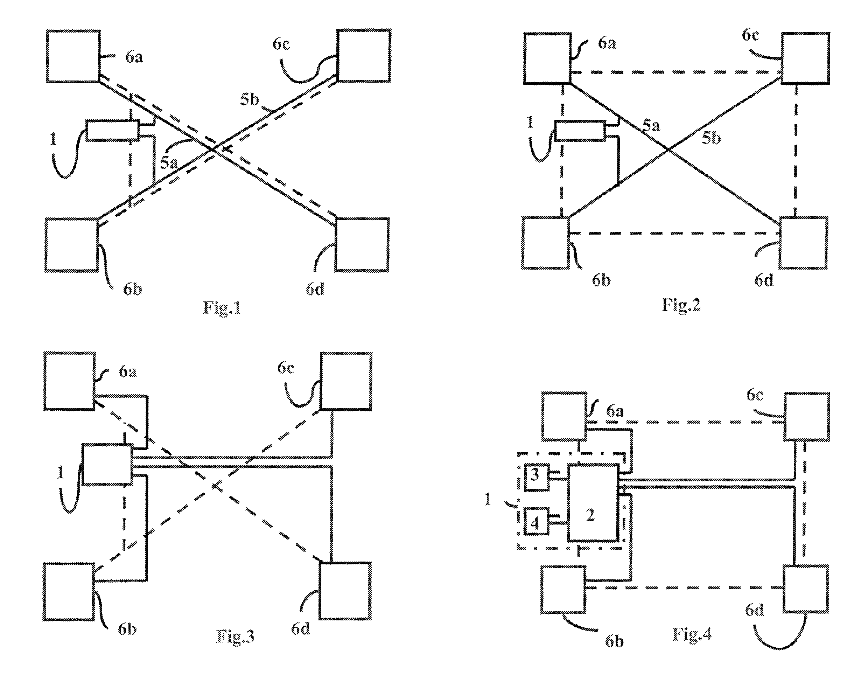

L'invention sera mieux comprise et d'autres particularités et avantages apparaîtront à la lecture de la description qui va suivre à lire en relation avec les dessins annexés, dans lesquels les figures 1 à 4 montrent des modes particuliers de mise en oeuvre de l'invention pour surveiller le réseau d'alimentation énergétique des étriers de frein d'un véhicule automobile à quatre roue. Sur les figures, les quatre roues équipées d'un frein électrique découplé sont représentées par les références 6a à 6d.

Sur la figure 1, le module 1 central alimente en énergie électrique (lignes de puissance en traits pleins) les quatre étriers de frein. Les étriers sont alimentés deux par deux en parallèle selon un schéma en diagonal. Le module 1 alimente ainsi l'étrier avant droit 6a et l'étrier arrière gauche 6d en parallèle via une première ligne de puissance 5a et alimente l'étrier avant gauche 6b et l'étrier arrière droit 6c via une deuxième ligne de puissance 5b. L'ensemble formé par les étriers électriques et le réseau de puissance qui les alimente forme la charge du module central 1.

Chaque étrier est muni notamment d'un capteur de courant et d'un capteur de tension. Un réseau de communication avec connexion en diagonale est également prévu, représenté en pointillés, pour relier chaque étrier au module 1 central. Chaque étrier peut ainsi transmettre au module 1 central une information relative à la tension qu'il reçoit et au courant qu'il consomme, soit directement, soit via un autre module intermédiaire non représenté.

Le module 1 central (non détaillé sur la figure 1) comprend notamment une source d'énergie de type batterie et un module de commande qui gère la distribution d'énergie électrique fournie par la batterie aux différents étriers, en fonction notamment d'instructions reçues du conducteur. On notera que le module de commande peut également être déporté vers un calculateur central du véhicule apte à communiquer avec l'ensemble des organes du véhicule commandés électroniquement. Le module 1 comprend également des capteurs aptes à mesurer le courant et la tension en sortie du module 1 à l'entrée des lignes de puissance 5a, 5b.

Pour la mise en oeuvre de l'invention, le module 1 comprend un moyen pour déterminer la consommation énergétique de chaque étrier à partir des indications de courant et de tension fournies sur la ligne de communication par le capteur de l'étrier considéré. Bien sûr, la détermination de l'énergie consommée tient compte notamment des pertes dans les lignes 5a, 5b et des connexions électriques série / parallèle de chaque étrier. Le module 1 comprend encore un moyen pour déterminer l'énergie fournie aux étriers, à partir des informations fournies par les capteurs courant / tension du module 1. Le module 1 comprend enfin un moyen de comparaison, pour comparer l'énergie fournie avec l'énergie consommée.

Si la différence entre l'énergie fournie et l'énergie consommée est faible, par exemple de l'ordre quelques pour cents, le module 1 ne signale rien. Si au contraire, la différence est importante, cela signifie soit un défaut d'un capteur, soit la présence d'un défaut électrique sur la ligne de puissance, ou au niveau de l'étrier de frein, ou au niveau du module central 1. Le module 1 transmet une alerte qui entraîne une réaction appropriée selon l'importance de la différence entre l'énergie fournie et l'énergie consommée (ie selon l'importance du défaut électrique) : allumage d'un voyant de signalisation, passage dans un mode de fonctionnement d'urgence, arrêt du véhicule, etc.

Le dispositif peut être amélioré en prévoyant deux capteurs courant / tension (mesurant la même information) au niveau de chaque étrier et deux capteurs courant / tension dans le module central (mesurant la même information). En corrélant l'ensemble des données fournies par les capteurs redondants, il est alors possible de déterminer plus précisément la gravité et la position du défaut électrique, au niveau de l'étrier, du module central ou de la ligne de puissance entre les deux.

Sur la figure 2, une variante du réseau de communication est représentée. Les étriers ne sont plus reliés en diagonale, mais en carré. L'étrier arrière gauche 6d est ainsi relié à l'étrier avant gauche 6b et à l'étrier arrière droit 6c via des lignes de communication distinctes. L'étrier avant droit 6a est relié à l'étrier arrière droit et au module central 1 via des lignes de communication distinctes ; le l'étrier avant gauche 6b est également relié au module central 1 via une ligne de communication distincte. Le fonctionnement du dispositif de la figure 2 est le même que celui de la figure 1, seules les chemins de transmission d'information sont légèrement différents.

Sur la figure 3, une variante du réseau de puissance est représentée. Ici, chaque étrier est alimenté par le module 1 via une ligne de puissance distincte, ce qui permet une gestion individualisée de l'alimentation électrique de chaque étrier. Dans une version améliorée, le module 1 est équipé de capteurs courant / tentions à l'entrée de chaque ligne électrique alimentant un étrier ; et le moyen de comparaison du module 1 compare séparément les informations fournies par chaque étrier avec les informations fournies par le capteur courant : tension correspondant du module 1.

Sur la figure 4, une variante du module central 1 est représentée. Deux sources d'énergie sont prévues, reliées par une ligne de communication au module central 1, et le module de commande du module 1 comprend des moyens pour gérer l'alimentation des quatre étriers à partir de l'une et / ou de l'autre des sources d'énergie. On pourra prévoir par exemple que l'une des sources d'énergie est une source de secours, de type condensateur, qui est rechargée pendant la mise en mouvement du véhicule. Chaque source d'énergie est munie de capteurs propres à mesurer notamment le niveau de charge de la source. Le module central compare l'énergie fournie par chaque source avec l'énergie consommée par les étriers et émet éventuellement une alerte si un défaut est détecté.

## Revendications

1. Dispositif de surveillance, dans un véhicule, d'un réseau de distribution d'énergie électrique reliant au moins un dispositif d'alimentation fournissant une énergie électrique à au moins une charge électrique par l'intermédiaire d'une ligne de puissance, le véhicule comprenant également un réseau de communication permettant au dispositif d'alimentation et à la charge d'échanger des informations, le dispositif de surveillance comprenant des moyens pour déterminer une consommation énergétique de la charge à partir d'une information fournie par la charge sur le réseau de communication, le dispositif de surveillance étant **caractérisé en ce qu'**il comprend également :
• des moyens pour déterminer une quantité d'énergie fournie à la charge par le dispositif d'alimentation à partir d'une information fournie par le dispositif d'alimentation sur le réseau de communication,
• des moyens pour comparer la dite consommation énergétique de la charge avec la dite quantité d'énergie fournie à la charge, et
• des moyens pour produire une alerte si la dite consommation énergétique de la charge est différente de la dite quantité d'énergie fournie à la charge.

2. Dispositif selon la revendication 1, dans lequel la charge est un consommateur d'énergie, l'information fournie par la charge étant une indication du courant et / ou de la tension et / ou de la puissance électrique consommé par le consommateur d'énergie.

3. Dispositif selon la revendication 2, dans lequel la charge est un étrier de frein électrique.

4. Dispositif selon la revendication 1 dans lequel la charge comprend au moins deux consommateurs d'énergie connectés électriquement en série ou en parallèle au dispositif d'alimentation, la consommation énergétique étant déterminée à partir d'une information relative à la consommation énergétique de l'un des consommateur et d'une information relative à la consommation énergétique de l'autre des consommateurs.

5. Dispositif selon la revendication 3, dans lequel les deux consommateurs d'énergie sont deux étriers de frein électrique, chacun monté sur une roue d'un même essieu du véhicule ou sur une roue d'une diagonale du véhicule, les deux étriers étant alimentés en parallèle par le dispositif d'alimentation par une ligne énergétique commune du réseau d'alimentation.

6. Dispositif selon l'une revendication 1, dans lequel le dispositif d'alimentation est une source d'énergie telle qu'une batterie d'accumulateurs ou un condensateur.

7. Dispositif selon la revendication 6, dans lequel l'information fournie par le dispositif d'alimentation est une indication du courant et / ou de la tension et / ou de la puissance électrique fournie par le dispositif d'alimentation et / ou un niveau de charge du dispositif d'alimentation.

8. Dispositif selon l'une des revendications 1 ou 2, dans lequel le dispositif d'alimentation comprend au moins deux sources d'énergie et un boîtier de distribution pour connecter l'une et / ou l'autre des sources d'énergie à la charge, et en ce que la quantité d'énergie produite est obtenue à partir d'une information fournie par l'une des source et d'une information fournie par l'autre des sources sur le réseau de communication.
